# EUROPEAN PATENT APPLICATION

(11) **EP 2 689 925 A1**
(43) Date of publication of application: **29.01.2014**
(21) Application number: 13173666.2
(22) Date of filing: 25.06.2013
(51) Int. Cl.: B32B 5/08, B62K 19/02

(54) **Mixed fiber structure used on a bicycle**

(30) Priority: 25.07.2012 CN 201220361031 U
(71) Applicant: Giant (Kunshan) Co., Ltd., 215300 Kunshan City Jiangsu (CN)
(72) Inventor: Yu, Chen-Kai, 215300 Kunshan City (CN)
(74) Representative: Lang, Christian

(57) **Abstract**

A mixed fiber structure used on a bicycle is provided with a plurality of mixed fiber substructures which are coupled in a parallel manner to one another to form a bicycle part, each of the mixed fiber substructures includes a plurality of two types of fibers which are alternatively arranged in a parallel manner and all extend along an axial direction, between each two neighboring fibers and between each two neighboring mixed fiber substructures is arranged an adhesive layer, and one of the two types of fibers is carbon fiber. The proportion between the carbon fiber and the glass fiber can be adjusted according to the special toughness and strength requirements for specific bicycle parts. Furthermore, the carbon and glass fibers are bonded together by the adhesive layer instead of being woven together, so the manufacturing cost of the present invention can also be reduced.

## Description

### BACKGROUND OF THE INVENTION

### Field of the Invention

The present invention relates to a mixed fiber structure, and more particularly to a mixed fiber structure used on a bicycle.

### Description of the Prior Art

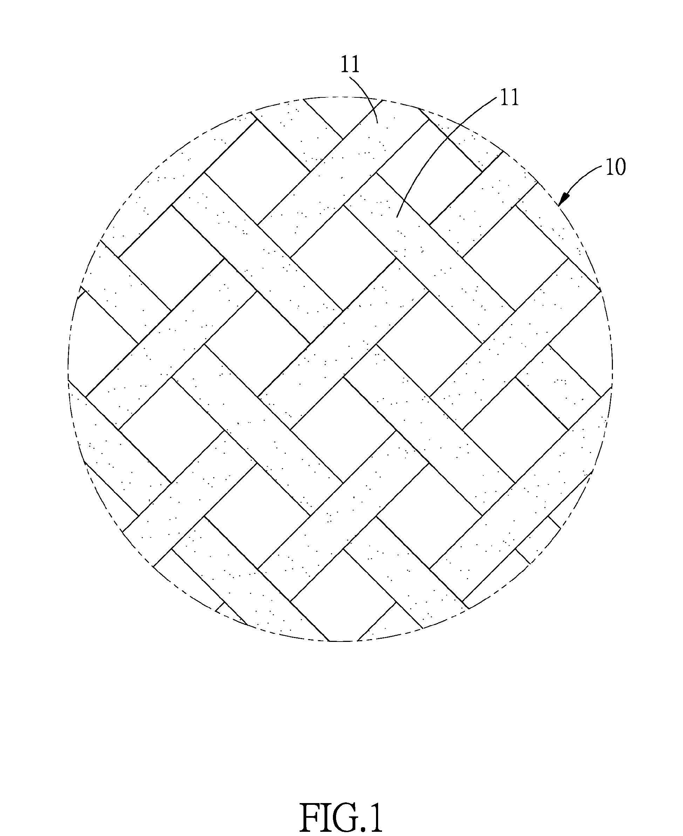

Carbon fiber is used in bicycle industry to make products light and strong, due to its light weight and strong structure strength. As shown in Fig. 1, a carbon fiber fabric 10 is woven from a plurality of carbon fibers 11 which are interlaced at right angles to form the carbon fiber fabric 10. Then the carbon fiber fabric 10 can be rolled into a bicycle part, such a tube. However, carbon fiber is very expensive. Furthermore, the structure fully made of carbon fabric may not meet the requirement of toughness and is likely to fracture.

To enhance toughness, bicycle parts manufactures came up with a method to produce the bicycle parts by alternatively superimposing a plurality of layers of carbon fiber fabric 10 and glass fiber fabric 20 together, this not only enhances toughness but also reduces material cost. However, in addition to the fact that the producing of the carbon fiber fabric 10 and the glass fiber fabric 20 involves a weaving process, the layers of carbon fiber fabric 10 and glass fiber fabric 20 should be manually superimposed layer by layer, and will finally be bonded together by being subjected to a hot melting process. This method for alternatively superimposing the carbon and glass fiber fabric doesn't allow for accurate adjustment of the proportion between the glass fiber and the carbon fiber, and further involves complicated production and assembly procedures and therefore is uneconomical.

The present invention has arisen to mitigate and/or obviate the afore-described disadvantages.

### SUMMARY OF THE INVENTION

The primary objective of the present invention is to provide a low-cost mixed fiber structure used on a bicycle, which is capable of meeting the toughness and strength requirements for specific bicycle parts, less likely to fracture, and easy to manufacture.

To achieve the above objective, a mixed fiber structure used on a bicycle in accordance with the present invention comprises:
a plurality of mixed fiber substructures which are coupled in a parallel manner to one another to form a bicycle part, each of the mixed fiber substructures includes a plurality of two types of fibers which are alternatively arranged in a parallel manner and all extend along an axial direction, between each two neighboring fibers and between each two neighboring mixed fiber substructures is arranged an adhesive layer, and one of the two types of fibers is carbon fiber.

Preferably, the respective mixed fiber substructures are covered from both sides with an upper debonding layer and a lower debonding layer.

Since the fiber substructures is a mixed structure formed by the glass fiber and the carbon fiber, the proportion between the carbon fiber and the glass fiber can be adjusted according to the special toughness and strength requirements for specific bicycle parts. Furthermore, the carbon fiber and the glass fiber are arranged in a parallel manner and glued to each other by the adhesive layer, the bonding and assembling of the carbon and glass fibers don't require the use of knitting machines, and the manufacturing cost of the present invention can also be reduced. Furthermore, the method of bonding the carbon and glass fibers by using the adhesive layer (hot press) ensures that the carbon and glass fibers can be bonded more firmly. The glass fiber of the present invention can also be replaced with Basalt fiber, slate fiber, Kevlar fiber, bamboo fiber or Aramid fiber.

### BRIEF DESCRIPTION OF THE DRAWINGS

Fig. 1 is an enlarged view of a part of a conventional carbon fiber fabric;

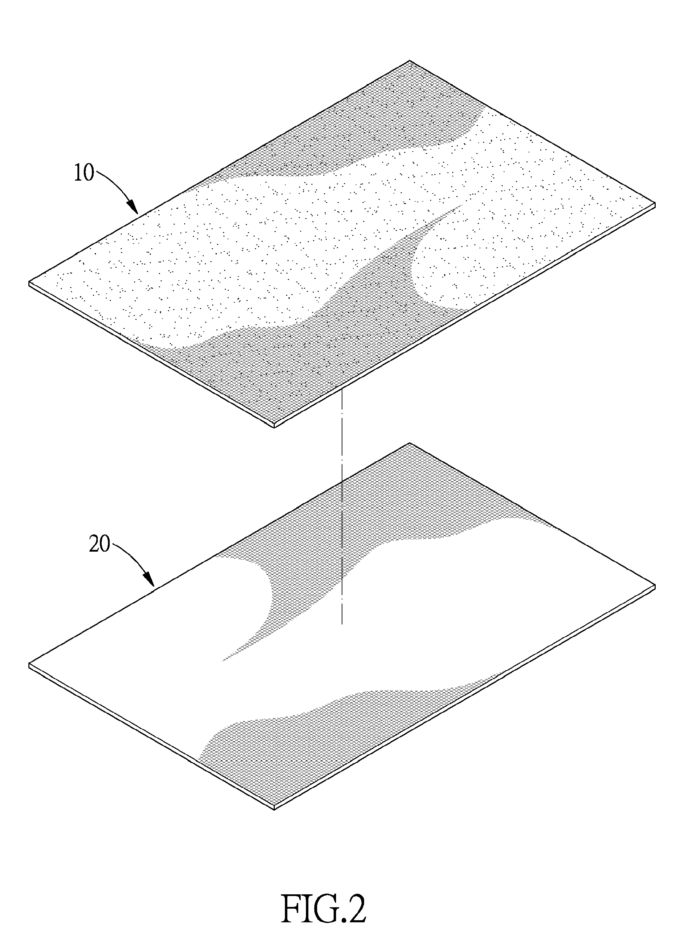

Fig. 2 is an illustrative view of a conventional mixed fiber structure;
Fig. 3 is an exploded view of a mixed fiber structure used on a bicycle in accordance with a preferred embodiment of the present invention;
Fig. 4 is an assembly view of the mixed fiber structure used on a bicycle in accordance with the present invention; and

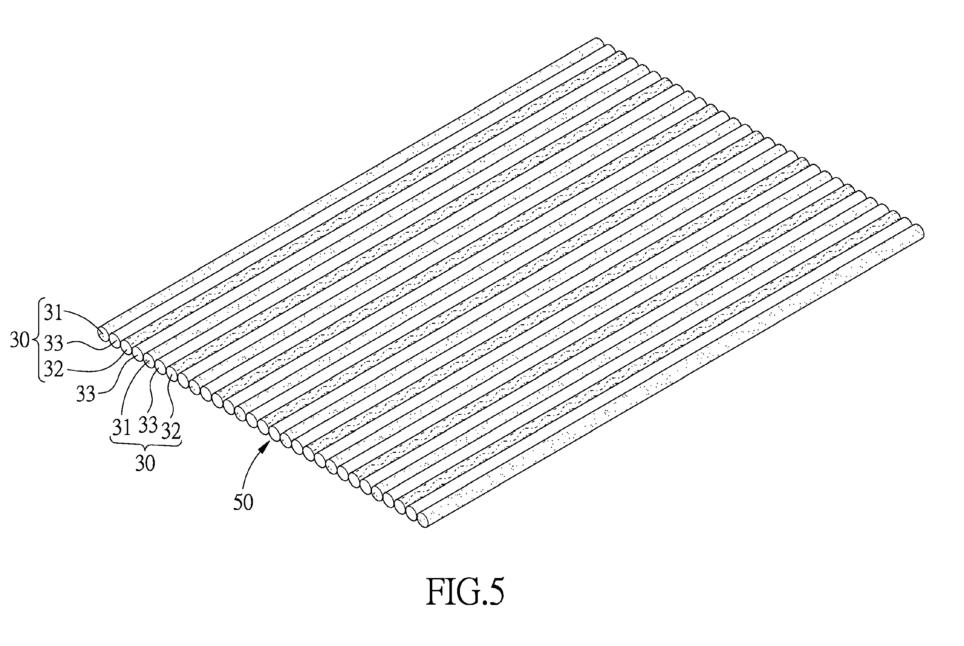

Fig. 5 is an assembly view of a mixed fiber structure used on a bicycle in accordance with another preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

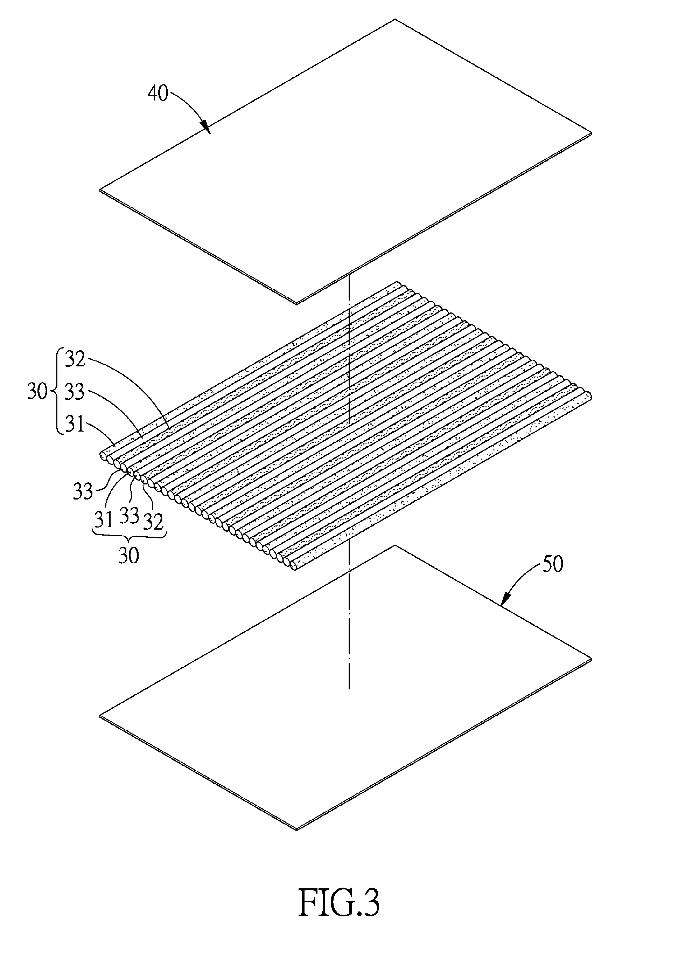

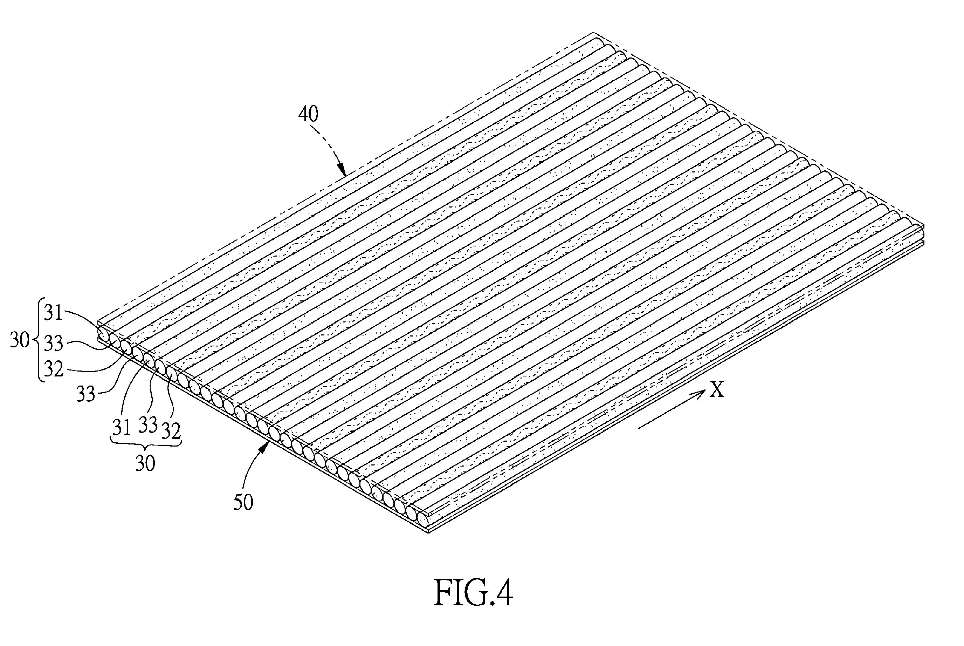

Referring to Figs. 3-4, a mixed fiber structure used on a bicycle in accordance with a preferred embodiment of the present invention comprises a plurality of mixed fiber substructures 30 which are coupled in a parallel manner to one another to form a bicycle part. Each of the mixed fiber substructures 30 is made of two different types of fibers, one type of the fibers is carbon fiber 31, all the fibers extend in an axial direction X, and between each two neighboring fibers and between each two neighboring mixed fiber substructures 30 is arranged an adhesive layer.

In this embodiment, each of the mixed fiber substructures 30 includes a plurality of carbon fibers 31 and a plurality of glass fibers 32 which are alternatively arranged in a parallel manner and all extend along the axial direction X. Between each two neighboring carbon and glass fibers 31, 32 and between each two neighboring mixed fiber substructures 30 is arranged an adhesive layer 33. The carbon and glass fibers 31, 32, and the mixed fiber substructures 30 are bonded together by being subjected to a hot press process. The respective mixed fiber substructures 30 are covered from both sides with an upper debonding layer 40 and a lower debonding layer 50.

The mixed fiber substructures 30 possess the characteristics of both the glass fiber 32 and the carbon fiber 31 since they consist of the glass fiber 32 and the carbon fiber 31, therefore, the mixed fiber structure of the present invention can directly be formed into the shape of a desired bicycle part. Furthermore, the proportion between the carbon fiber 31 and the glass fiber 32 can be adjusted according to the special toughness and strength requirements for specific bicycle parts, and the glass fiber fabric and the carbon fiber fabric don't have to be manually superimposed, which is a labor-saving.

In this embodiment, both sides of the respective mixed fiber substructures 30 are covered with the upper debonding layer 40 and the lower debonding layer 50, respectively, to carry and support the mixed fiber substructures 30, so that structural stability of the present invention can be enhanced.

Since the fiber substructures 30 is a mixed structure formed by the glass fiber 32 and the carbon fiber 31, the proportion between the carbon fiber 31 and the glass fiber 32 can be adjusted according to the special toughness and strength requirements for specific bicycle parts. Furthermore, the carbon fiber 31 and the glass fiber 32 are arranged in a parallel manner and glued to each other by the adhesive layer 33, the bonding and assembling of the carbon and glass fibers 31, 32 don't require the use of knitting machines, and the manufacturing cost of the present invention can also be reduced. Furthermore, the method of bonding the carbon and glass fibers 31, 32 by using the adhesive layer 33 (hot press) ensures that the carbon and glass fibers 31, 32 can be bonded more firmly.

The glass fiber 32 of the present invention can also be replaced with Basalt fiber, slate fiber, Kevlar fiber, bamboo fiber or Aramid fiber.

While we have shown and described various embodiments in accordance with the present invention, it is clear to those skilled in the art that further embodiments may be made without departing from the scope of the present invention.

## Claims

1. A mixed fiber structure used on a bicycle, comprising:
a plurality of mixed fiber substructures (30) which are coupled in a parallel manner to one another to form a bicycle part, each of the mixed fiber substructures (30) including a plurality of two types of fibers which are alternatively arranged in a parallel manner and all extend along an axial direction (X), between each two neighboring fibers and between each two neighboring mixed fiber substructures (30) being arranged an adhesive layer, and one of the two types of fibers is carbon fiber (31).

2. The mixed fiber structure used on a bicycle as claimed in claim 1, wherein the respective mixed fiber substructures (30) are covered from both sides with an upper debonding layer (40) and a lower debonding layer (50).
